# EUROPEAN PATENT SPECIFICATION

(11) **EP 0 736 719 B1**
(45) Date of publication and mention of the grant of the patent: **14.07.1999**
(21) Application number: 95104955.0
(22) Date of filing: 03.04.1995
(51) Int. Cl.: F16L 47/02, F16L 21/06

(54) **Pipe connection and a method for its manufacture**
Rohrverbindung und Verfahren zur seiner Herstellung
Raccord de tuyaux et procédé de fabrication

(43) Date of publication of application: 09.10.1996
(73) Proprietor: Uponor B.V., 1000 BL Amsterdam (NL)
(72) Inventor: Järvenkylä, Jyri, SF-15870 Hollola (FI)
(74) Representative: Patentanwälte Dipl.-Ing. R. Splanemann Dr. B. Reitzner Dipl.-Ing. K. Baronetzky

(56) References cited:
- EP-A- 0 337 037
- EP-A- 0 402 200
- WO-A-92/21908
- DE-U- 1 683 897
- DE-U- 1 757 878
- DE-U- 7 636 068
- DE-U- 8 910 407
- US-A- 3 061 503
- US-A- 3 406 991

## Description

The invention relates to a pipe connection, according to the opening portion of claim 1 and to a method of manufacturing a pipe connection for a pipe, according to the opening portion of claim 9.

Plastic pipes are used increasingly in the transportation of liquids, such as different oils and chemicals, which are under a high pressure in the pipe. Since it is not worthwhile to raise the pressure resistance of a normal thermoplastic pipe higher than 15 to 20 bars, multi-layer pipes comprising a thermoplastic inner layer and, outside it, a reinforcing layer strengthened with fibres can be used as high-pressure pipes. The fibres are mainly glassfibre and they are coiled in interlacing spirals on top of the thermoplastic layer so that they typically form a reinforcing layer of about 0.5 to 2 mm on the thermoplastic layer. The fibre-reinforced outer layer is most often preferably covered with another thermoplastic layer, which contains for example the pigments and the identifying colours.

Before the glassfibres are coiled on top of the thermoplastic layer, they are satiated with molten thermoplastic. Since glassfibres do not attach easily to polyolefins, the adhesion must be improved with adhesives, which lose their adhesion-improving ability if they are contacted with a liquid.

A liquid flowing inside the pipeline and possibly also liquid outside the pipeline cannot usually come into contact with the adhesives due to the thermoplastic layer enveloping the fibres. However, the ends of the pipe do not have this protective layer, and therefore the pipe connections must be made in such a way that neither inner nor outer liquid can come into contact with the adhesives.

From DE-U-1 757 878, it is known to provide a pipe connection for a plastic pipe. This known pipe connection is not specially constructed to withstand high pressures when transporting liquids.

WO 92/21908 discloses this kind of a pipe connection. In this known pipe connection, the reinforcing layer gets thinner over a long surface towards the end of the pipe and ends a distance from the end of the thermoplastic layer, where an extension is formed. An adapter is fitted inside the extension, and outside the end of the thermoplastic layer the adapter is attached, by means of threads, to a steel pipe surrounding the end of the pipe. The adapter has a conical surface which presses the thermoplastic layer against the inner surface of the outside steel pipe.

The drawback of this known pipe connection is that liquid especially from the outside but also from the inside of the pipe can relatively easily enter the end of the reinforcing layer, which due to a small conical angle is very large and which thus comprises a great amount of adhesive on the surface of the pipe. A high-pressure liquid flowing inside the pipe can get to the end of the reinforcing layer by going around the end of the thermoplastic layer which is fixed between the adapter and the steel pipe with compressive force provided by threads.

In this known solution, the extension at the end of the pipe is formed in a usual manner, i.e. the extension has a conical surface to which a cylindrical part restricted to the end of the pipe is connected. Such an extension cannot be formed to the part of the pipe which has the reinforcing layer, since due to its characteristics the reinforcing layer does not allow the diameter to increase. Therefore it has been necessary to make the reinforcing layer thinner and to end it before the extension, which thus consists of only the thermoplastic layer. The pipe connection becomes then rather long, and the fitting conical surfaces of the extension and the adapter, which are the best sealing surfaces of the connection, have a relatively small surface area.

The object of this invention is to provide a pipe connection by means of which a plastic pipe equipped with a reinforcing layer can be joined in such a way that a liquid either inside or outside the pipe cannot come into contact with the end of the pipe. The pipe connection according to the invention is characterized in that there is outside the connection an external strengthening ring which covers the end of the pipe.

Placing the conical extension of the end of the pipe substantially at the end of the pipe provides the advantage that the conical surface may be formed with a larger surface area than in known solutions where the conical surface is situated some distance from the end of the pipe, since the diameter of a cylindrical part situated at the end of the pipe in known solutions cannot be made much greater than the diameter of the pipe due to the reinforcing layer of the pipe. In the solution according to the invention, on the other hand, the reinforcing layer glides along the outer surface of the end of the pipe when the pipe end is enlarged with a mandrel, so the reinforcing layer does not prevent the formation of a short and sharply opening extension in the pipe. Such a pipe connection is short in the axial direction of the pipe, but it has, however, a large conical surface to which the connecting piece can be welded to provide good liquid tightness.

The extension of the pipe end and the connecting piece are welded together in the simplest manner by means of heating provided by electricity, wherefore it is preferable that the conical surface of the extension and/or the connecting piece comprises means for welding the surfaces together, for example electrically conductive elements heatable by means of electricity or an induction field. These conductive elements are preferably made of metal, whereby they also act as reinforcement.

To improve the welding together of the connecting piece and the thermoplastic layer of the pipe, it is preferable that both parts are of the same thermoplastic.

In order for the reinforcing layer of the pipe to hinder the enlarging of the pipe end with the mandrel as little as possible, it is preferable that the conical surface of the extension extends to the end of the pipe.

During the welding the connecting piece warms up greatly. To maintain the original diameter of the connecting piece, it is preferable that a strengthening ring with a substantially rectangular cross-section is attached to the inner surface of the connecting piece.

An external strengthening ring can be used outside the connection to diminish the tensions produced by the pressure. If the external strengthening ring is to be made in the shape of a straight sleeve, which is simplest from the point of view of manufacturing, it is preferable to use conic rings which are wedged against the conical outer surface of the extension and welded both to the conical outer surface and to the external strengthening ring. The conic rings extend over the reinforcing layer and thus prevent the liquid from entering the end of the layer.

When the conical ends of two pipes or the like are joined together, it is preferable that the wedge-shaped rings situated against the extensions are of the same piece.

The invention also relates to a method of manufacturing a pipe connection for a pipe with a thermoplastic layer and outside this layer at least one reinforcing layer, according to which method the end of the pipe to be connected is heated, and an extension is formed at the end of the pipe by using a mandrel, and a ring-shaped connecting piece, consisting at least principally of plastic, is positioned inside the pipe against the extension, whereupon the connecting piece is attached to the pipe to be connected.

The method according to the invention is characterized in that the end of the pipe is widened by using a mandrel so that substantially conical surfaces are formed in the extension, the surfaces extending substantially to the end of the pipe and the inner surface being welded to a fitting conical outer surface in the connecting piece.

It is possible to produce, by means of the method according to the invention, a pipe connection in a much simpler way that the aforementioned known pipe connection. It must be noted in particular, that there is no need to shape the reinforcing layer in a known manner during the manufacturing, but the layer moves by itself along the outer surface of the pipe when the end of the pipe is enlarged with a mandrel.

The opening of the pipe end by using a mandrel can be performed in a simple manner in such a way that the connecting piece is pressed against the end of the pipe with the result of an extension.

The connecting piece can be attached to the extension in a simpler manner by means of friction welding or so that the conical outer surface of the connecting piece is welded to the conical inner surface of the extension by producing, in the conductive elements situated in the connecting piece and/or the extension, an electric current warming the plastic.

The welding of the extension and the connecting piece together can be improved in such a way that during the enlarging the extension of the plastic pipe is provided with a memory property which causes in the extension a tendency to contract, thus bringing about the necessary welding pressure when the extension and the connecting piece are joined together by means of heat.

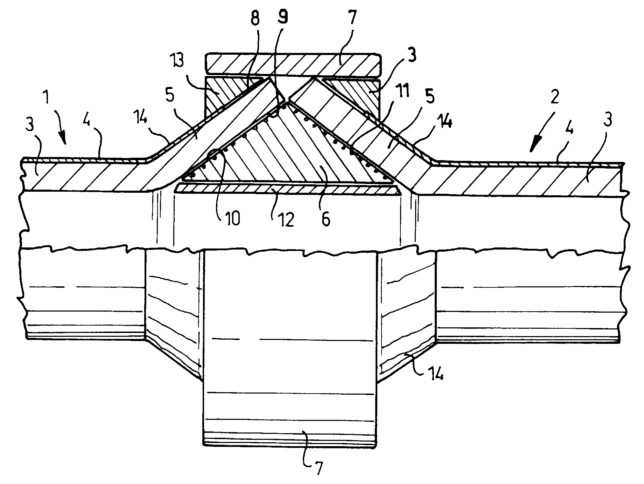

In the following, the invention will described in greater detail with reference to the accompanying drawing which presents a partial longitudinal profile of one embodiment of the pipe connection according to the invention.

The drawing shows two pipes 1 and 2, which both have a thermoplastic inner layer 3 and a reinforcing layer 4 strengthened with fibres and situated on the outer surface of the inner layer. Layer 4 is formed of for example glassfibres saturated with thermoplastic and spirally coiled in an angle of e.g. 45° or more with respect to the longitudinal axis of the pipe to provide a net-like structure. There may also be several reinforcing layers according to the use of the pipe, and they may have a structure different from that described above. On top of the reinforcing layer 4 there is often a protective layer not shown in the drawing.

At the ends of the pipes to be connected there are extensions 5, which are set against each other and inside of which there is a ring-shaped connecting piece 6, which consists at least principally of plastic. Outside the extension there is an external strengthening ring 7, which covers the narrow opening between the extensions 5 and at least partly the outer surface of the extensions. The connecting piece 6 and the strengthening ring 7 are attached to the pipes 1, 2 to be connected. The softening temperature of the strengthening ring is higher than that of the plastic of parts 5 and 6.

In the embodiment according to the invention shown in the figure, the ends of the pipe are enlarged with a mandrel in such a way that the extension 5 has a conical outer surface 8 and an inner surface 9, which extend to the end of the pipe. Thus, the extension is substantially conical along its entire length. The angle between the longitudinal axis of the pipe and the surfaces 8, 9 of the extensions is about 10 to 50°, most suitably about 30°.

The connecting piece 6 has the cross-sectional shape of an isosceles triangle, and the sides 10 of the triangle have the same inclination as the inner surfaces 9 of the extensions, wherefore the surfaces fit together. The connecting piece 6 and the extensions 5 are welded together from surfaces 9 and 10. For the purpose of welding, the surfaces 10 of the connecting piece comprise electrically conductive elements 11 which can be heated with electricity which is produced in them by means of an induction field or is fed to them through wires not shown in the drawing. The elements may consists of, for example, parallel metal conductors or a metal net. To make the joint between the connecting piece and the extensions as strong as possible, it is preferable that the connecting piece and the pipe layer 3 are of the same thermoplastic.

To maintain the original diameter of the connecting piece, a strengthening ring 12 with a substantially rectangular cross-section can be attached to the inner surface of the connecting piece 6. The strengthening ring 12 can be attached to the connecting piece for example by welding by means of a conductive metal net situated on the surface of the ring.

In the embodiment of the drawing, the external strengthening ring 7 is a straight sleeve, and therefore there remains a wedge-shaped space between the outer surfaces 8 of the extensions and the inner surface of the strengthening ring. In the embodiment, these spaces are filled with wedge-shaped rings 13, which are attached to the external strengthening ring 7 and to the outer surface 8 of the extensions. The part of the reinforcing layer 4 situated on the outer surface 8 of the extension is denoted with reference numeral 14. The wedge-shaped rings extend over the aforementioned reinforcing layer 14 so that the end of the reinforcing layer remains between the ring 13 and the surface 8.

The pipe connection according to the invention is produced in the following manner. The end of a thermoplastic pipe 1, 2 provided with for example a net-like reinforcing layer 4 is heated, and an extension 5 is formed at the end by using a mandrel. A ring-shaped connecting piece 6 is set inside the extension, after which the other extension is positioned against the other side of the connecting piece. The connecting piece is attached from its surfaces 10 to the inner surface 9 of the extensions, after which an external strengthening ring 7 and wedge-shaped rings 13 are attached to the outer surface 8 of the extensions.

According to the invention, the enlarging with a mandrel is performed in such a way that the surfaces of the extension become substantially conical and extend to the end of the pipe. Since the enlarging is performed when the end of the pipe is heated, the reinforcing layer 4 is not inflexibly attached to the outer surface of the pipe, but it can glide along the surface 8 away from the end of the pipe when the conical angle of the extension widens. This concerns especially a reinforcing layer formed of spiral fibres or fibres positioned in a net-like pattern. By varying the coiling angle of the reinforcement and the composition of the bundles of fibre, it is possible to control how easily for example the fibres glide or the fibre bundles open during the enlarging. Alternatively, the reinforcing layer is not made to glide, but the fibre bundles are allowed to open, wherefore the reinforcement only becomes less dense. The pressure resistance of the joint is sufficiently good even without the external strengthening ring 7 when the enlarging is performed in such a way that the reinforcements are not torn but are mainly positioned less densely and glide with respect to the extension 5. The part of the reinforcing layer accumulated at the bottom of the extension is denoted with reference numeral 14. The free end of the part 14 of the reinforcing layer is caught between the outer surface 8 of the extension and the wedge-shaped rings 13, thus preventing outside liquid from entering that end.

The enlarging of the pipe end may be performed by means of a separate tool or by pressing the connecting piece 6 against the end of the pipe. During the enlarging, a memory property can be produced in the extension to cause in the extension a tendency to contract when the extension and the connecting piece are being attached together by means of heat. The connecting piece can be attached to the inner surface 9 of the extensions by means of friction welding or by heating the surfaces 9 and 10 by means of elements 11.

The invention is not restricted to the embodiment described above, but it can vary within the scope of the appended claims. For example the outer surface of the pipe may comprise thermoplastic fibres or flanges instead of the typical glass reinforcement. The connection also works well when the reinforcement is thin aluminium sheet which yields during enlarging. Therefore, the wedge-shaped rings 13 can be left out and replaced with an external strengthening ring 7 which has a U-shaped cross-section and the lateral surface of which presses against the surface of the extensions 5. The external strengthening ring 7 and the strengthening ring 12 on the inner surface of the connecting piece can also be left out. Alternatively, the two wedge-shaped rings 13 can be combined to form one single ring, the cross-section of which would correspond substantially to a combination of said rings 13. Such a combined ring would increase the strength of the joint both in the axial and radial direction.

The pipe connection according to the invention can be used for joining two pipes together in the above-described manner, but it can also be used for connecting the pipe with other parts of pipelines, for example with pipe fittings. Especially in such cases the shape of the connecting piece can differ considerably from that presented in the drawing.

In the preferred embodiment, the welding heats between the inner surface of the pipe and the outer surface of the connecting piece, the outer surface of the pipe and the inner surface of the wedge-shaped ring 13, and the outer surface of the wedge-shaped ring and the inner surface of the strengthening ring 12 are produced almost simultaneously by using for example the same electric welding power source. The connecting piece 6 and the strengthening ring 7 may be one and the same piece.

A short cylindrical part may be formed, if desired, at the free end of the extension, the greatest length of the part depending on the structure of the reinforcing layer. The shape of the extension may also otherwise differ to some extent from a pure conical form.

## Claims

1. A pipe connection for a pipe with a thermoplastic layer (3) and outside this layer at least one reinforcing layer (4), said pipe connection comprising
an extension (5) at the end of the pipe (1, 2) to be connected, and
a ring-shaped connecting piece (6) which is situated inside the pipe to be connected at the extension (5) and which consists at least principally of plastic, whereupon
the connecting piece (6) is attached to the pipe (1, 2) to be connected,
whereby the connecting piece (6) and the extension (5) of the pipe to be connected have fitting substantially conical surfaces (8, 9, 10), which extend substantially to the end of the pipe and from which the connecting piece (6) and the extension (5) are welded together, **characterized** in that there is outside the connection an external strengthening ring (7), which covers the end of the pipe.

2. A pipe connection according to claim 1, **characterized** in that the conical surface of the extension (5) and/or the connecting piece (6) has means for welding the surfaces together, for example electrically conductive elements (11) heatable by means of electricity or an induction field.

3. A pipe connection according to claim 2, **characterized** in that the electrically conductive elements are preferably made of metal, substantially parallel conductors or nets (11).

4. A pipe connection according to claim 1, **characterized** in that the connecting piece (6) and the pipe (3) to be connected are of the same thermoplastic.

5. A pipe connection according to claim 1, **characterized** in that the conical surface (8, 9) of the extension (5) extends to the end of the pipe.

6. A pipe connection according to claim 1, **characterized**in that a strengthening ring (12) with a substantially rectangular cross-section is attached to the inner surface of the connecting piece (6) to support the connecting piece and to keep its diameter in its original shape during the welding.

7. A pipe connection according to claim 1, **characterized** in that a ring (13) with a wedge-shaped cross-section is attached to the conical outer surface (8) of the extension (5), the external strengthening ring (7) being in turn attached to said ring.

8. A pipe connection according to claim 7 for joining together the conical ends of two pipes or the like, **characterized** in that the wedge-shaped rings (13) situated against the extensions (5) are of the same piece.

9. A method of manufacturing a pipe connection for a pipe (1, 2) with a thermoplastic layer (3) and outside this layer at least one reinforcing layer (4), according to which method
- the end of the pipe (1, 2) to be connected is heated, and an extension (5) is formed at the end of the pipe by using a mandrel, and
- a ring-shaped connecting piece (6), consisting at least principally of plastic, is positioned inside the pipe against the extension (5), whereupon
- the connecting piece (6) is attached to the pipe (1, 2) to be connected,
whereby the end of the pipe is widened by using a mandrel so that substantially conical surfaces (8, 9) are formed in the extension (5), the surfaces extending substantially to the end of the pipe and the inner surface (9) being welded to a fitting conical outer surface (10) in the connecting piece (6) **characterized** in that an external strengthening ring (7) covering the end of the pipe is attached to the outer surface of the extension.

10. A method according to claim 9, **characterized** in that the extension (5) is produced by pressing the connecting piece (6) against the end of the pipe.

11. A method according to claim 9, **characterized** in that the conical outer surface (10) of the connecting piece is attached to the conical inner surface (9) of the extension by means of friction welding.

12. A method according to claim 9, **characterized** in that the conical outer surface (10) of the connecting piece is welded to the conical inner surface (9) of the extension by producing a plastic-heating electric current in the electrically conductive elements (11) situated in the connecting piece and/or the extension.

13. A method according to claim 11 or 12, **characterized** in that a memory property is produced in the extension (5) of the plastic pipe during the enlarging, said memory property causing in the extension a tendency to contract when the extension (5) and the connecting piece (6) are joined together by means of heat.

14. A method according to claim 9, **characterized** in that a strengthening ring (12) with a substantially rectangular cross-section is attached to the inner surface of the connecting piece (6) to support the connecting piece and to maintain the original shape of its diameter during welding.

15. A method according to claim 9, **characterized** in that a ring (13) with a wedge-shaped cross-section is attached to the conical outer surface (8) of the extension, the external strengthening ring (7) being in turn attached to said ring.

16. A method according to claim 15 for joining together the conical ends of two pipes or the like, **characterized** in that a ring is positioned against the extensions (5), the cross-section of the ring corresponding substantially to a combination of both of said wedge-shaped rings (13), the ring increasing the strength of the joint both in the axial and radial direction.

## Patentansprüche

1. Eine Rohrverbindung für ein Rohr mit einer thermoplastischen Schicht (3) und außerhalb dieser Schicht mindestens einer Verstärkungsschicht (4), wobei die Rohrverbindung folgendes aufweist:
eine Verlängerung (5) am Ende des zu verbindenden Rohrs (1, 2) und
ein ringförmiges Verbindungsstück (6), das sich innerhalb des zu verbindenden Rohrs an der Verlängerung (5) befindet und das mindestens hauptsächlich aus Kunststoff besteht, wobei
das Verbindungsstück (6) an dem zu verbindenden Rohr (1, 2) angebracht ist,
wobei das Verbindungsstück (6) und die Verlängerung (5) des zu verbindenden Rohrs passende im wesentlichen konische Oberflächen (8, 9, 10) aufweisen, die sich im wesentlichen zum Ende des Rohrs erstrecken und von denen aus das Verbindungsstück (6) und die Verlängerung (5) zusammengeschweißt werden, dadurch gekennzeichnet, daß es außerhalb der Verbindung einen äußeren Verstärkungsring (7) gibt, der das Ende des Rohrs abdeckt.

2. Rohrverbindung nach Anspruch 1, dadurch gekennzeichnet, daß die konische Oberfläche der Verlängerung (5) und/oder des Verbindungsstücks (6) eine Vorrichtung zum Zusammenschweißen der Oberflächen, zum Beispiel elektrisch leitfähige Elemente (11), die mit Hilfe von Elektrizität oder eines Induktionsfelds heizbar sind, aufweist.

3. Rohrverbindung nach Anspruch 2, dadurch gekennzeichnet, daß die elektrisch leitfähigen Elemente vorzugsweise aus Metall, im wesentlichen parallelen Leitern oder Netzen (11) hergestellt sind.

4. Rohrverbindung nach Anspruch 1, dadurch gekennzeichnet, daß das Verbindungsstück (6) und das zu verbindende Rohr (3) aus demselben Thermplast bestehen.

5. Rohrverbindung nach Anspruch 1, dadurch gekennzeichnet, daß sich die konische Oberfläche (8, 9) der Verlängerung (5) zum Ende des Rohrs erstreckt.

6. Rohrverbindung nach Anspruch 1, dadurch gekennzeichnet, daß ein Verstärkungsring (12) mit einem im wesentlichen rechteckigen Querschnitt an der inneren Oberfläche des Verbindungsstücks (6) angebracht ist, um das Verbindungsstück abzustützen und während des Schweißens dessen Durchmesser in seiner ursprünglichen Form zu halten.

7. Rohrverbindung nach Anspruch 1, dadurch gekennzeichnet, daß ein Ring (13) mit einem keilförmigen Querschnitt an der konischen äußeren Oberfläche (8) der Verlängerung (5) angebracht ist, wobei der äußere Verstärkungsring (7) wiederum an dem Ring angebracht ist.

8. Rohrverbindung nach Anspruch 7 zur Verbindung der konischen Enden von zwei Rohren oder dergleichen, dadurch gekennzeichnet, daß die keilförmigen Ringe (13), die gegen die Verlängerungen (5) angeordnet sind, aus demselben Stück bestehen.

9. Ein Verfahren zur Herstellung einer Rohrverbindung für ein Rohr (1, 2) mit einer thermoplastischen Schicht (3) und außerhalb dieser Schicht mindestens einer Verstärkungsschicht (4), gemäß welchem Verfahren
- das Ende des zu verbindenden Rohrs (1, 2) erwärmt wird, und am Ende des Rohrs durch Verwendung eines Dorns eine Verlängerung (5) ausgebildet wird, und
- ein ringförmiges Verbindungsstück (6), das mindestens hauptsächlich aus Kunststoff besteht, innerhalb des Rohrs gegen die Verlängerung (5) angeordnet wird, woraufhin
- das Verbindungsstück (6) an dem zu verbindenden Rohr (1, 2) angebracht wird,
wobei das Ende des Rohrs durch Verwendung eines Dorns so geweitet wird, daß in der Verlängerung (5) im wesentlichen konische Oberflächen (8, 9) ausgebildet werden, wobei sich die Oberflächen im wesentlichen zum Ende des Rohrs erstrecken und die Innenfläche (9) an eine passende konische Außenfläche (10) im Verbindungsstück (6) geschweißt wird, dadurch gekennzeichnet, daß ein äußerer Verstärkungsring (7), der das Ende des Rohrs abdeckt, an der äußeren Oberfläche der Verlängerung angebracht wird.

10. Verfahren nach Anspruch 9, dadurch gekennzeichnet, daß die Verlängerung (5) durch Drücken des Verbindungsstücks (6) gegen das Ende des Rohrs hergestellt wird.

11. Verfahren nach Anspruch 9, dadurch gekennzeichnet, daß die konische Außenfläche (10) des Verbindungsstücks mit Hilfe von Reibschweißen an der konischen Innenfläche (9) der Verlängerung angebracht wird.

12. Verfahren nach Anspruch 9, dadurch gekennzeichnet, daß die konische Außenfläche (10) des Verbindungsstücks durch Erzeugung eines elektrischen Stroms in den im Verbindungsstück und/oder der Verlängerung befindlichen elektrisch leitfähigen Elementen (11), der einen Kunststoff erwärmt, an die konische Innenfläche (9) der Verlängerung geschweißt wird.

13. Verfahren nach Anspruch 11 oder 12, dadurch gekennzeichnet, daß während der Erweiterung in der Verlängerung (5) des Kunststoffrohrs eine Erinnerungsfähigkeit erzeugt wird, wobei die Erinnerungsfähigkeit in der Verlängerung ein Bestreben bewirkt, sich zu kontrahieren, wenn die Verlängerung (5) und das Verbindungsstück (6) mit Hilfe von Wärme miteinander verbunden werden.

14. Verfahren nach Anspruch 9, dadurch gekennzeichnet, daß ein Verstärkungsring (12) mit einem im wesentlichen rechteckigen Querschnitt an der inneren Oberfläche des Verbindungsstücks (6) angebracht wird, um das Verbindungsstück abzustützen und die ursprüngliche Form seines Durchmessers während des Schweißens aufrechtzuerhalten.

15. Verfahren nach Anspruch 9, dadurch gekennzeichnet, daß ein Ring (13) mit einem keilförmigen Querschnitt an der konischen Außenfläche (8) der Verlängerung angebracht wird, wobei der äußere Verstärkungsring (7) wiederum an dem Ring angebracht wird.

16. Verfahren nach Anspruch 15 zur Verbindung der konischen Enden von zwei Rohren oder dergleichen, dadurch gekennzeichnet, daß gegen die Verlängerungen (5) ein Ring angeordnet wird, wobei der Querschnitt des Rings im wesentlichen einer Kombination der beiden keilförmigen Ringe (13) entspricht, wobei der Ring die Festigkeit der Verbindung sowohl in der axialen als auch der radialen Richtung erhöht.

## Revendications

1. Raccord de tube pour un tube muni d'une couche thermoplastique (3) et à l'extérieur de cette couche, d'au moins une couche de renforcement (4), ledit raccord de tube comprenant
un épanouissement (5) prévu à l'extrémité du tube (1, 2 ) à raccorder, et
une pièce de raccordement annulaire (6) qui est située à l'intérieur du tube qui doit être raccordé à l'épanouissement (5) et qui est composée au moins principalement de matière plastique, à la suite de quoi
la pièce de raccordement (6) est fixée au tube (1, 2) à raccorder,
la pièce de raccordement (6) et l'épanouissement (5) du tube à raccorder ayant des surfaces de montage pratiquement coniques (8, 9, 10) qui se prolongent pratiquement jusqu'à l'extrémité du tube et par lesquelles la pièce de raccordement (6) et l'épanouissement (5) sont soudés l'un à l'autre, caractérisé en ce qu'il est prévu à l'extérieur du raccord une bague de renforcement extérieure (7) qui recouvre l'extrémité du tube.

2. Raccord de tube selon la revendication 1, caractérisé en ce que la surface conique de l'épanouissement (5) et/ou la pièce de raccordement (6) possèdent des moyens destinés à souder des surfaces entre elles, par exemple des éléments conducteurs de l'électricité (11) pouvant être chauffés au moyen d'un courant électrique ou d'un champ d'induction.

3. Raccord de tube selon la revendication 2, caractérisé en ce que les éléments conducteurs de l'électricité sont de préférence faits de conducteurs ou filets métalliques, pratiquement parallèles (11).

4. Raccord de tube selon la revendication 1, caractérisé en ce que la pièce de raccordement (6) et le tube (3) à raccorder sont faits de la même matière thermoplastique.

5. Raccord de tube selon la revendication 1, caractérisé en ce que la surface conique (8, 9) de l'épanouissement (5) se prolonge jusqu'à l'extrémité du tube.

6. Raccord de tube selon la revendication 1, caractérisé en ce qu'une bague de renforcement (12) possédant une section pratiquement rectangulaire est fixée à la surface intérieure de la pièce de raccordement (6) pour supporter la pièce de raccordement et maintenir son diamètre dans sa forme d'origine pendant le soudage.

7. Raccord de tube selon la revendication 1, caractérisé en ce qu'une bague (13) possédant une section en forme de coin est fixée à la surface extérieure conique (8) de l'épanouissement (5), la bague de renforcement extérieure (7) étant à son tour fixée à ladite bague.

8. Raccord de tube selon la revendication 7, destiné à raccorder les extrémités coniques des deux tubes ou analogues, caractérisé en ce que les bagues en forme de coin (13) situées contre les épanouissements (5) sont d'une seule pièce.

9. Procédé de fabrication d'un raccord de tube pour un tube (1, 2) muni d'une couche thermoplastique (3) et, à l'extérieur de cette couche, d'au moins une couche de renforcement (4), selon lequel procédé
- l'extrémité du tube (1, 2) à raccorder est chauffée et un épanouissement (5) est formé à l'extrémité du tube à l'aide d'un mandrin, et
- une pièce de raccordement annulaire (6) composée au moins principalement de matière plastique, est positionnée à l'intérieur du tube, contre l'épanouissement (5), à la suite de quoi
- la pièce de raccordement (6) est fixée au tube (1, 2) à raccorder,
l'extrémité du tube étant élargie à l'aide d'un mandrin de manière que des surfaces pratiquement coniques (8, 9) soient formées dans l'épanouissement (5), les surfaces se prolongeant pratiquement jusqu'à l'extrémité du tube et la surface intérieure (9) étant soudée à une surface extérieure conique complémentaire (10) de la pièce de raccordement (6), caractérisé en ce qu'une bague de renforcement extérieure (7) recouvrant l'extrémité du tube est fixée à la surface extérieure de l'épanouissement.

10. Procédé selon la revendication 9, caractérisé en ce que l'épanouissement (5) est réalisé en pressant la pièce de raccordement (6) contre l'extrémité du tube.

11. Procédé selon la revendication 9, caractérisé en ce que la surface extérieure conique (10) de la pièce de raccordement est fixée à la surface intérieure conique (9) de l'épanouissement par soudage par friction.

12. Procédé selon la revendication 9, caractérisé en ce que la surface extérieure conique (10) de la pièce de raccordement est soudée à la surface intérieure conique (9) de l'épanouissement en faisant passer un courant électrique de chauffage de la matière plastique dans les éléments conducteurs de l'électricité (11) situés dans la pièce de raccordement et/ou dans l'épanouissement.

13. Procédé selon la revendication 11 ou 12, caractérisé en ce qu'une propriété de mémoire est créée dans l'épanouissement (5) du tube en matière plastique pendant l'élargissement, ladite propriété de mémoire engendrant dans l'épanouissement une tendance à se contracter lorsque l'épanouissement (5) et la pièce de raccordement (6) sont assemblés l'un à l'autre par la chaleur.

14. Procédé selon la revendication 9, caractérisé en ce qu'une bague de renforcement (12) possédant une section pratiquement rectangulaire est fixée à la surface intérieure de la pièce de raccordement (6) pour supporter la pièce de raccordement et pour maintenir la forme d'origine de son diamètre pendant le soudage.

15. Procédé selon la revendication 9, caractérisé en ce qu'une bague (13) possédant une section en forme de coin est fixée à la surface extérieure conique (8) de l'épanouissement, la bague de renforcement extérieure ( 7) étant à son tour fixée à ladite bague.

16. Procédé selon la revendication 15 pour raccorder les extrémités coniques des deux tubes ou analogues, caractérisé en ce qu'une bague positionnée contre les épanouissements (5), la section de la bague correspondant pratiquement à une combinaison des deux bagues en forme de coin (13), la bague augmentant la solidité de la jonction à la fois dans la direction axiale et dans la direction radiale.
